# EUROPÄISCHE PATENTSCHRIFT

(11) **EP 2 417 562 B1**
(45) Veröffentlichungstag und Bekanntmachung des Hinweises auf die Patenterteilung: **25.11.2015**
(21) Anmeldenummer: 10713184.9
(22) Anmeldetag: 06.04.2010
(51) Int. Cl.: G06K 19/077

(54) **SUBSTRAT MIT MASCHINELL VEREINZELBAREN CHIPKARTEN**
SUBSTRATE HAVING CHIP CARDS THAT CAN BE SEPARATED BY MACHINE
SUBSTRAT AVEC CARTES À PUCE POUVANT ÊTRE SÉPARÉES À LA MACHINE

(30) Priorität: 07.04.2009 DE 102009016773
(43) Veröffentlichungstag der Anmeldung: 15.02.2012
(73) Patentinhaber: Giesecke & Devrient GmbH, 81677 München (DE)
(72) Erfinder: SCHRÖDER, Sönke, 80637 München (DE)
(86) Internationale Anmeldenummer: PCT/EP2010/054513
(87) Internationale Veröffentlichungsnummer: WO 2010/115877

(56) Entgegenhaltungen:
- DE-A1- 19 926 348
- DE-U1-202008 011 480

## Beschreibung

Die vorliegende Erfindung betrifft ein Chipkartensubstrat, von dem sich eine oder mehrere Chipkarten oder ein oder mehrere zur Herstellung von Chipkarten geeignete Chipkartenrohlinge maschinell abtrennen lassen.

In diesem Zusammenhang sind Chipkarten im ID-1-Format gemäß ISO 7816 ("Scheckkartenformat") bekannt, aus denen sich ein Substratanteil im ID-000-Format gemäß ISO 7816 (z.B. kompakte SIM-Karte für ein Mobilfunkgerät) mitsamt dem Chip herauslösen lässt. Dieser herausgelöste Substratanteil kann dann als ID-000-Chipkarte in ein Mobilfunkgerät eingesetzt werden.

Dieser Aufbau von Chipkarten hat zum Zweck, eine Chipkarte bereitzustellen, die von einem Anwender sowohl in einem für Chipkarten im ID-000-Format geeigneten Mobilfunkgerät als auch in einem für Chipkarten im ID-1 Format geeigneten Mobilfunkgerät eingesetzt werden können. Jedoch ist nahezu keines der heute erhältlichen Mobilfunkgeräte mehr für Chipkarten im ID-1 Format ausgelegt. Somit führt diese besondere Chipkartenkonstruktion meist lediglich zu einer unnötigen Materialverschwendung, erleichtert allerdings die Handhabung der Mini-Chipkarten.

Die DE 20 2008 011480 U1 schlägt vor, mehrere ID-000-Chipkarten aus einem Chipkartensubstrat im ID-1-Format herzustellen. Hierzu werden in einem Substrat im ID-1 Format mehrere an zwei Seiten miteinander oder mit dem Substrat verbundene und manuell aus dem Substrat heraustrennbare ID-000-Chipkarten vorgeschlagen. Dies führt zu einer Einsparung von Chipkartenmaterial. Darüber hinaus kann das Chipkartensubstrat mittels für das ID-1 Format ausgelegten Standardmaschinen bearbeitet werden, womit mehrere ID-000-Chipkarten gleichzeitig bearbeitet und dadurch weitere Kosten eingespart werden können.

Aus der DE 199 26 348 A1 ist eine Minichipkarte bekannt, bestehend aus einer Standard-Trägerkarte und einer Mehrzahl von mit derselben verbundenen Minichipkarten, die jeweils einen Chip aufweisen. Die Standard-Trägerkarte weist eine Sollbruchlinie auf, die keinen gemeinsamen Schnittpunkt mit einer Randseite einer der Minichipkarten bildet. Daher ist nach dem Teilen der Standard-Trägerkarte jede der Minichipkarten weiterhin von Kartenmaterial umschlossen.

Jedoch stellt das manuelle Heraustrennen der ID-000-Chipkarten aus dem Substrat einen erheblichen Aufwand dar, der die Kostenersparnis durch das Einsparen von Substratmaterial und durch das gleichzeitige Bearbeiten mehrerer ID-000-Chipkarten aufwiegen kann.

Aufgabe der vorliegenden Erfindung ist es daher, mehrere ID-000 in einem Chipkartensubstrat vorzusehen, die sich besonders einfach maschinell aus diesem herauslösen und direkt maschinell weiterverarbeiten lassen.

Diese Aufgabe wird durch ein Chipkartensubstrat sowie ein Verfahren zum Herauslösen von Chipkartensubstratanteilen aus dem Chipkartensubstrat nach den Merkmalen der unabhängigen Patentansprüche gelöst. In den davon abhängigen Ansprüchen sind vorteilhafte Ausgestaltungen und Weiterbildungen der Erfindung angegeben.

Das erfindungsgemäße Chipkartensubstrat weist die Merkmale des kennzeichnenden Teils des Anspruchs 1 auf. Die Chipkarten oder Chipkartenrohlinge sind vorzugsweise im ID-000-Format oder im Mini-UICC-Format gemäß ISO 7816 ausgeführt. Das Verfahren lässt sich auch auf im ID-1 Format hergestellt Speicherkarten wie µSD, Mini-SD, MMC etc. überragen. Bei einem erfindungsgemäßen Verfahren zum Herauslösen von Chipkartensubstratanteilen aus dem Chipkartensubstrat wird dementsprechend zumindest ein Chipkartensubstratanteil durch Erzeugen eines Biegemoments entlang der primären Sollbruchlinie abgebrochen.

Unter einer "Sollbruchlinie" des Chipkartensubstrats ist in diesem Zusammenhang eine Linie von Chipkartensubstratmaterial zu verstehen, welches im Vergleich zu dem übrigen Chipkartensubstratmaterial schwächer oder geschwächt ist. Entlang dieser Linie lässt sich das Chipkartensubstrat somit leichter brechen als an anderen Stellen. Da sich die primäre Sollbruchlinie von einer ersten Seite des Chipkartensubstrats zu einer der ersten Seite gegenüberliegenden zweiten Seite erstreckt, kann der Chipkartensubstratanteil durch Erzeugen eines Biegemoments einfach von dem Chipkartensubstrat abgebrochen werden. Somit lässt sich der Chipkartensubstratanteil insbesondere auch maschinell von dem Substrat abbrechen. Die beiden Seiten des Chipkartensubstrats, zwischen denen sich die Sollbruchlinien erstrecken, liegen einander "gegenüber", was bedeutet, dass diese Seiten zumindest nicht aneinandergrenzen, sondern vielmehr vorzugsweise einander diametral gegenüberliegen. Insbesondere kann es sich bei der ersten und der zweiten Seite um gegenüberliegende Seiten eines Rechtecks handeln und die Sollbruchlinie verbindet diese Seiten vorzugsweise orthogonal oder im Wesentlichen orthogonal. Ein "Chipkartenrohling" ist ein Chipkartensubstratanteil, der zum Einsetzen eines Chips geeignet ist oder hierfür angepasst ist oder angepasst werden kann, z.B. durch Vorsehen einer entsprechenden Vertiefung. Ein Chipkartenrohling kann somit z.B. eine Chipkarte mit fehlendem Chip sein.

Die primäre Sollbruchlinie erstreckt sich vorzugsweise geradlinig. Hierdurch lässt sich das Chipkartensubstrat besonders einfach durch Ausüben eines Biegemoments entlang der Sollbruchlinie brechen. Es kann aber in einzelnen Anwendungsfällen sinnvoll sein, Sollbruchlinien vorzusehen, die nur im Wesentlichen geradlinig verlaufen. Möglich sind z.B. gewellte Sollbruchlinien oder Zick-Zack-förmige Sollbruchlinien, die zwar im Gesamtverlauf einer Gerade folgen oder leicht gekrümmt sind, die aber derart verlaufen, dass sich das Chipkartensubstrat durch ein in einer Richtung verlaufendes Biegemoment ohne Weiteres entlang der gesamten Sollbruchlinie brechen lässt. Ein solcher Verlauf der Sollbruchlinien kann etwa durch eine besonders platzsparende Anordnung der Chipkarten oder Chipkartenrohlinge in dem Chipkartensubstrat bedingt sein.

Die Sollbruchlinie umfasst bevorzugt eine Kerbe im Chipkartensubstrat oder eine Perforation des Chipkartensubstrats. Diese sind einfach herzustellen, insbesondere im Spritzgussverfahren, welches bevorzugt zur Herstellung des Chipkartensubstrats eingesetzt wird. Dies kann durch geeignete Formgebung der Spritzgussform erfolgen. Beispielsweise kann eine Kerbe im Chipkartensubstrat durch Einlegen eines Keils oder eines Kerbmessers in die Spritzgussform erzeugt werden. Auch Kavitäten des Chipkartensubstrats, in die Chip-Module eingebracht werden, können durch geeignete Formgebung der Spritzgussform erzeugt werden.

Zum Erzeugen eines Biegemoments entlang der primären Sollbruchlinie wird vorzugsweise eine im Wesentlichen entlang der primären Sollbruchlinie verlaufende Werkzeugkante verwendet. Die Kante verläuft im Idealfall exakt entlang der primären Sollbruchlinie, kann aber auch nahe an der primären Sollbruchline verlaufen, so dass beim Ausüben einer Kraft auf das Chipkartensubstrat mittels der Werkzeugkante das auf das Chipkartensubstrat ausgeübte Biegemoment entlang der Sollbruchlinie verglichen mit anderen Stellen des Chipkartensubstrats so hoch ist, dass das Chipkartensubstrat entlang der Sollbruchlinie und nicht an anderen Stellen bricht.

Das Chipkartensubstrat ist vorzugsweise im Wesentlichen rechteckig. Insbesondere kann das Chipkartensubstrat besonders bevorzugt ID-1-Format gemäß ISO 7816 aufweisen. Der Begriff "im Wesentlichen" bedeutet in diesem Zusammenhang, dass z.B. die Ecken des Chipkartensubstrats leicht abgerundet sein können, wie z.B. bei Kreditkarten üblich, und dass durch Aussparungen, die sich durch die Formgebung der aus dem Chipkartensubstrat herauszulösenden Chipkarten ergeben können, Abweichungen von einer exakten Rechteckform gegeben sein können.

Außerdem umfasst das Chipkartensubstrat vorzugsweise zumindest einen primären Steg zur Handhabung und Stabilisierung des Chipkartensubstrats, der nicht Bestandteil eines Chipkartensubstratanteils und damit insbesondere nicht Bestandteil der Chipkarten oder Chipkartenrohlinge ist. Der primäre Steg ermöglicht ein Greifen und Handhaben des Chipkartensubstrats, ohne die Chipkarten oder deren Chip-Kontaktflächen berühren zu müssen. Dementsprechend, wird beim Abbrechen der Chipkartensubstratanteile von dem Chipkartensubstrat das Chipkartensubstrat vorzugsweise an dem primären Steg festgehalten.

Weiterhin umfasst das Chipkartensubstrat vorzugsweise zumindest eine sekundäre Sollbruchlinie, entlang derer sich wiederum zumindest eine Chipkarte oder ein Chipkartenrohling von dem vom Chipkartensubstrat abgetrennten Chipkartensubstratanteil abbrechen lässt. Dementsprechend wird zumindest eine Chipkarte oder zumindest ein Chipkartenrohling von dem abgebrochenen Chipkartensubstratanteil durch Erzeugen eines Biegemoments entlang dieser sekundären Sollbruchlinie abgebrochen. Somit können letztlich einzelne Chipkarten aus dem Chipkartensubstratanteil bzw. aus dem Chipkartensubstrat hergestellt werden. Sekundäre Sollbruchlinien können in derselben Weise ausgestaltet sein wie die primären Sollbruchlinien und erstrecken sich vorzugsweise wiederum möglichst geradlinig. In Analogie zur primären Sollbruchlinie wird zum Erzeugen eines Biegemoments entlang der sekundären Sollbruchlinie vorzugsweise eine im Wesentlichen entlang der sekundären Sollbruchlinie verlaufende Werkzeugkante verwendet.

Weitere Merkmale und Vorteile der Erfindung ergeben sich aus der folgenden Beschreibung von erfindungsgemäßen Ausführungsbeispielen sowie weiteren Ausführungsalternativen im Zusammenhang mit den Zeichnungen. Darin zeigen:
- Figuren 1 bis 10: schematisch Chipkartensubstrate im ID-1-Format mit maschinell vereinzelbaren Chipkarten im Mini-UICC-Format sowie im ID-000-Format;
und
- Figur 11: schematisch einen Aufbau zum Abbrechen von Chipkarten von einem erfindungsgemäßen Chipkartensubstrat.

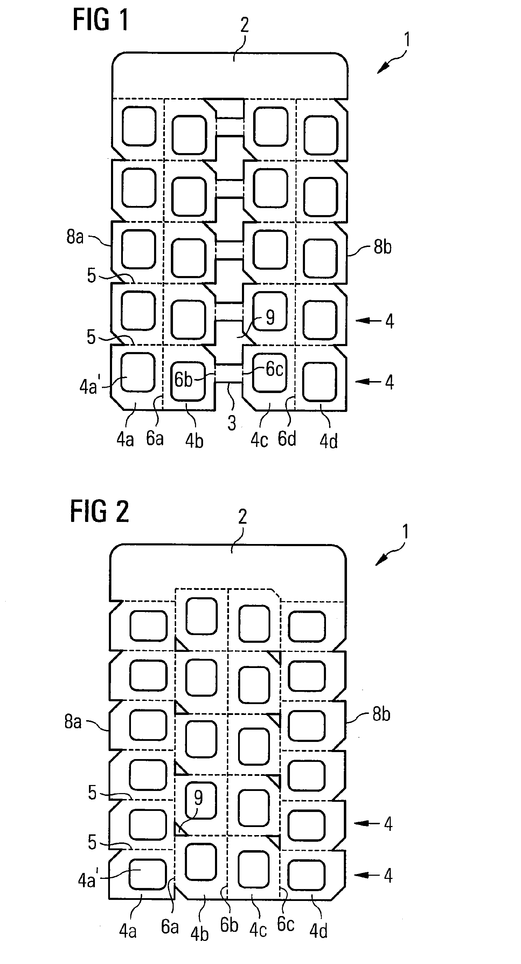

Das in Fig. 1 dargestellte Chipkartensubstrat 1 im ID-1-Format umfasst 20 Mini-UICC-Chipkarten, z.B. 4a, 4b, 4c, 4d, mit Chips, z.B. 4a'. Von dem Chipkartensubstrat 1 lässt sich ein Chipkartensubstratanteil 4, der aus einem sekundären Steg 3 und vier Chipkarten 4a, 4b, 4c, 4d besteht, entlang einer Sollbruchlinie 5 abbrechen. Die Sollbruchlinie 5 verläuft geradlinig von einer ersten Seite 8a zu einer der ersten Seite 8a gegenüberliegenden zweiten Seite 8b des Chipkartensubstrats. Zum Handhaben des Chipkartensubstrats 1 und zum Festhalten des Chipkartensubstrats 1 während des Abbrechens des Chipkartensubstratanteils 4 ist ein primärer Steg 2 vorgesehen. Dieser primäre Steg 2 dient zudem der Stabilisierung des Chipkartensubstrats 1. Von dem Chipkartensubstratanteil 4 wiederum können die Chipkarten 4a, 4b, 4c, 4d entlang sekundärer Sollbruchlinien 6a, 6b, 6c, 6d abgebrochen werden, während der Chipkartensubstratanteil 4 an dem sekundären Steg 3 gehalten wird. Außerdem können von dem Chipkartensubstrat 1 entlang weiterer primärer Sollbruchlinien 5 weitere Chipkartensubstratanteile 4 abgebrochen werden.

In dem Chipkartensubstrat 1 sind Aussparungen 9 vorgesehen. Diese dienen einerseits zur Formgebung der Mini-UICC-Chipkarten 4b, 4c. Andererseits wird durch Formung der Aussparungen 9 die Form der sekundären Stege 3 an die zum Greifen des Chipkartensubstratanteils 4 verwendete Greifeinrichtung (nicht dargestellt) angepasst. Die Aussparungen 9 sind so angeordnet, dass sie die primären Sollbruchlinien 5 unterbrechen.

Wie aus dem Stand der Technik bekannt, lässt sich von dem in Fig. 2 dargestellten Chipkartensubstrat 1 ein vier Chipkarten 4a, 4b, 4c, 4d umfassender Chipkartensubstratanteil 4 entlang einer Sollbruchlinie 5 abbrechen, die von einer ersten Seite 8a zu einer der ersten Seite 8a gegenüberliegenden zweiten Seite 8b des Chipkartensubstrats 1 verläuft. Zum Stabilisieren und zum Handhaben des Chipkartensubstrats 1 ist wiederum ein primärer Steg 2 vorgesehen. Von einem isolierten Chipkartensubstratanteil 4 können die Chipkarten 4a, 4b, 4c, 4d wiederum entlang sekundärer Sollbruchlinien 6a, 6b, 6c abgebrochen werden. Zudem können von dem Chipkartensubstrat 1 entlang weiterer primärer Sollbruchlinien 5 weitere Chipkartensubstratanteile 4 abgebrochen werden.

Das in Fig. 2 dargestellte Chipkartensubstrat 1 umfasst im Gegensatz zu dem in Fig. 1 dargestellten Chipkartensubstrat 1 22 Mini UICC-Chipkarten. Nachteilig ist jedoch, dass die meisten primären Sollbruchlinien 5 nicht geradlinig verlaufen und dass die Chipkartensubstratanteile 4 keinen sekundären Steg 3 zum Greifen des isolierten Chipkartensubstratanteils 4 aufweisen. Zur Formgebung der Mini UICC-Chipkarten, z.B. 4c', sind Aussparungen 9 im Chipkartensubstrat 1 erforderlich. Diese sind so angeordnet, dass sie die primären Sollbruchlinien 5 unterbrechen.

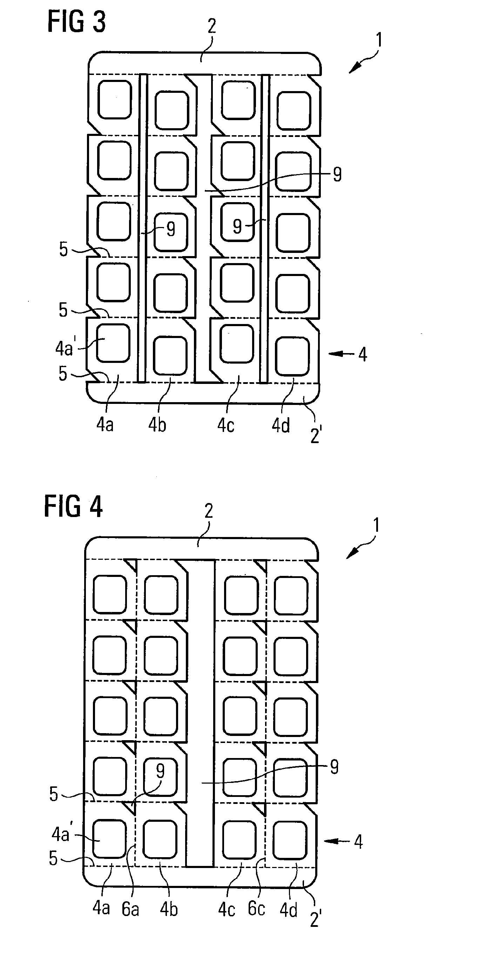

Das aus dem Stand der Technik bekannte und in Fig. 3 dargestellte Chipkartensubstrat 1 besitzt neben einem ersten primären Steg 2 noch einen weiteren primären Steg 2'. Durch diesen weiteren primären Steg 2' werden die Chipkarten 4a, 4b, 4c, 4d bei Handhabung des Chipkartensubstrats 1 vor Beschädigung geschützt. Außerdem stabilisiert der weitere primäre Steg 2' das Chipkartensubstrat zusätzlich. Bevor die Chipkartensubstratanteile entlang einer geradlinigen primären Sollbruchlinie 5 von dem Chipkartensubstrat 1 abgebrochen werden, muss zunächst der weitere primäre Steg 2' entlang einer geradlinigen primären Sollbruchlinie 5 von dem Chipkartensubstrat 1 abgebrochen werden.

Der Stand der Technik gemäß Fig. 4 weist Chipkartensubstratanteile 4 mit jeweils nur einer Chipkarte 4a, 4b, 4c, 4d auf. Diese sind nicht durch sekundäre Stege oder sekundäre Sollbruchlinien miteinander verbunden. Vielmehr befinden sich zwischen den Chipkarten 4a, 4b, 4c, 4d Aussparungen 9. Somit entfällt ein Abbrechen der Chipkarten 4a, 4b, 4c, 4d von den isolierten Chipkartensubstratanteilen 4. Durch die Verwendung zweier primärer Stege 2, 2' können in dem vorliegenden Ausführungsbeispiel Chipkarten 4a, 4b, 4c, 4d mit nicht abgerundeten spitzen Ecken aus einem Chipkartensubstrat 1, dessen Ecken alle abgerundet sind, hergestellt werden.

Das in Fig. 4 dargestellte Chipkartensubstrat 1 besitzt ebenfalls neben dem ersten primären Steg 2 noch einen weiteren primären Steg 2', der entlang einer primären Sollbruchlinie 5 von dem Chipkartensubstrat 1 abgetrennt werden kann. Hier können jedoch jeweils zwei Chipkartensubstratanteile 4, zwischen denen eine Aussparung 9 liegt, entlang der geradlinigen Sollbruchlinie 5 von dem Chipkartensubstrat 1 abgebrochen werden. Diese beiden Chipkartensubstratanteile 4 umfassen jeweils zwei Chipkarten 4a, 4b bzw. 4c, 4d. Die Chipkarten 4a, 4b können entlang einer sekundären Sollbruchlinie 6a voneinander getrennt werden. Entsprechend können die Chipkarten 4c, 4d entlang einer sekundären Sollbruchlinie 6c voneinander getrennt werden. Zusätzlich zu der Aussparung 9, die zwischen den Chipkartensubstratanteilen 4 liegt, sind zur Formgebung der Mini- UICC-Chipkarten weitere Aussparungen 9 im Chipkartensubstrat 1 vorgesehen.

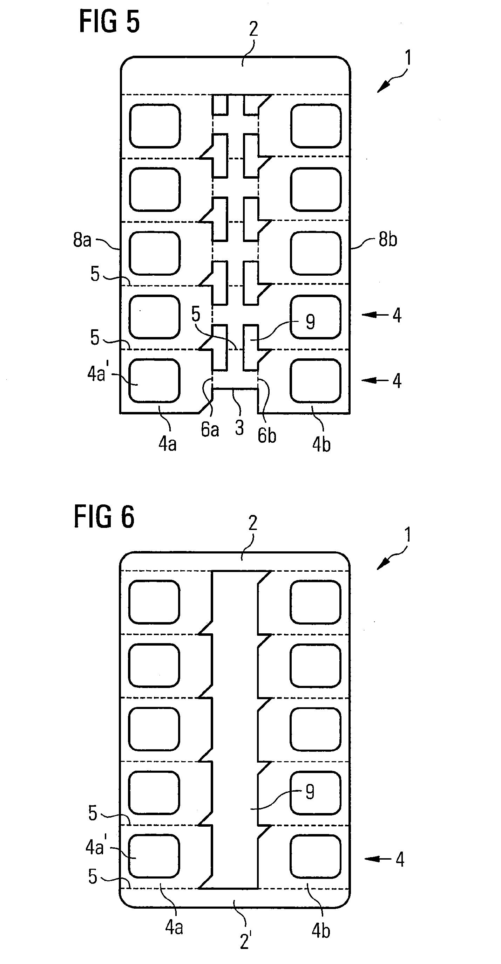

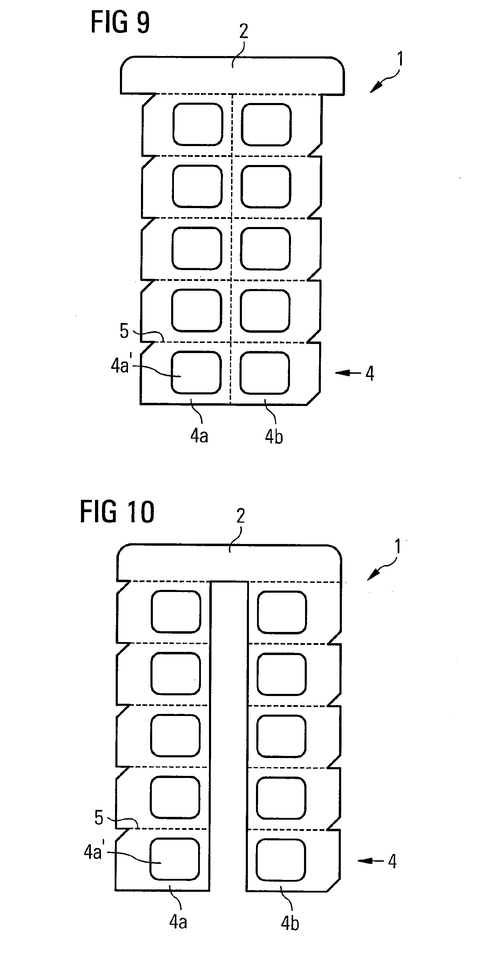

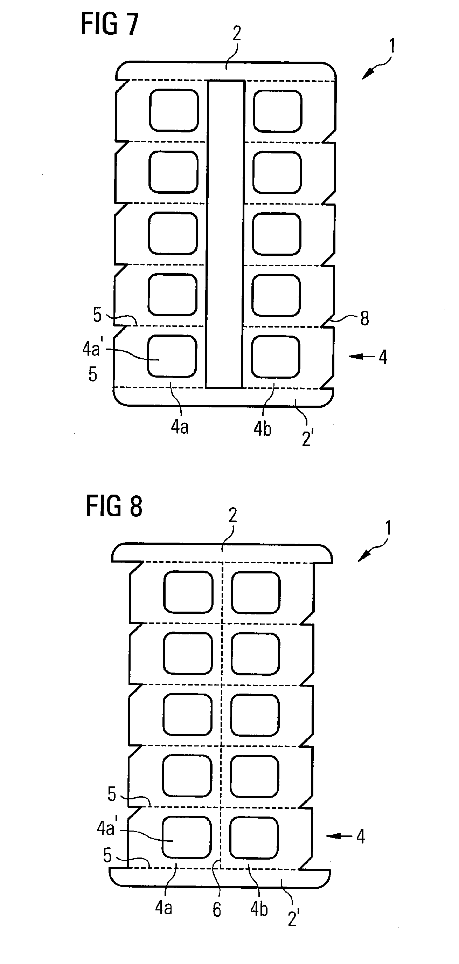

In Fig. 5 und in den folgenden Figuren 6 bis 10 sind Chipkartensubstrate im ID-1-Format dargestellt, die jeweils 10 ID-000-Chipkarten, z.B. 4a, 4b, mit Chips, z.B. 4a', umfassen. Von dem in Fig. 5 dargestellten Chipkartensubstrat 1 lässt sich ein Chipkartensubstratanteil 4, der aus einem sekundären Steg 3 und 2 Chipkarten 4a, 4b besteht, entlang einer primären Sollbruchlinie 5 abbrechen. Diese verläuft geradlinig von einer ersten Seite 8a zu einer der ersten Seite 8a gegenüberliegenden zweiten Seite 8b des Chipkartensubstrats 1. Wie in den vorherigen Ausführungsbeispielen ist zum Stabilisieren und Handhaben des Chipkartensubstrats 1 ein primärer Steg 2 vorgesehen. In Analogie zu dem in Fig. 1 dargestellten Ausführungsbeispiel können von dem Chipkartensubstratanteil 4 wiederum die 2 Chipkarten 4a, 4b entlang sekundärer Sollbruchlinien 6a, 6b abgebrochen werden, während der Chipkartensubstratanteil 4 an dem sekundären Steg 3 gehalten wird. Im Unterschied jedoch zu dem Ausführungsbeispiel von Fig. 1, bei dem sich der sekundäre Steg 3 nicht bis zu der primären Sollbruchlinie 5 erstreckt, erstreckt sich in dem Ausführungsbeispiel gemäß Fig. 5 die primäre Sollbruchlinie 5 durch den sekundären Steg 3 hindurch. In diesem Fall bricht auch der sekundäre Steg 3 beim Abbrechen des Chipkartensubstratanteils 4 entlang der primären Sollbruchlinie 5 und behindert so das Abbrechen des Chipkartensubstratanteils 4 nicht.

Die konkrete Gestalt des sekundären Stegs 3 dient der Anpassung an eine bestimmte Greifeinrichtung (nicht dargestellt) zum maschinellen Greifen des sekundären Stegs 3. Auch die Aussparungen 9 des Chipkartensubstrats 1, die ohnehin zur Formgebung der Chipkarten 4a, 4b gemäß dem ID-000 Format erforderlich sind, tragen zur Formgebung des sekundären Stegs 3 bei. Zudem sind vorliegend die Aussparungen 9 so gestaltet, dass sie große Unterbrechungen der sekundären Sollbruchlinien 6a und 6b schaffen, um das Abbrechen der Chipkarten 4a, 4b von dem Chipkartensubstratanteil 1 zu erleichtern. Wie bei den vorherigen Ausführungsbeispielen können auch in dem vorliegenden Ausführungsbeispiel von dem Chipkartensubstrat 1 entlang weiterer primärer Sollbruchlinien 5 weitere Chipkartensubstratanteile 4 abgebrochen werden.

Alle zuvor dargestellte Chipkartensubstrate 1 bzw. die darauf befindlichen Chipkarten können zunächst im ID-1-Format bearbeitet oder weiterverarbeitet werden, ggf. mit vorhandenen Produktionsmitteln zum Verarbeiten von ID-1-Chipkarten, bevor die Chipkartensubstratanteile 4 von dem Chipkartensubstrat 1 abgetrennt werden.

Bei allen zuvor dargestellten Ausführungsbeispielen verläuft die sekundäre Sollbruchlinie 6 entlang der Längsrichtung des Chipkartensubstrats 1. Ebenso ist es natürlich möglich, erfindungsgemäße Chipkartensubstrate 1 zu konstruieren, bei denen die primäre Sollbruchlinie 5 entlang der Längsrichtung des Chipkartensubstrats 1 verläuft. In diesem Fall könnten z.B. aus einem entsprechenden Chipkartensubstrat 1 im ID-1-Format Chipkartensubstratanteile 4 mit bis zu 7 in einer Reihe angeordneten Micro-UICC-Chipkarten erzeugt werden.

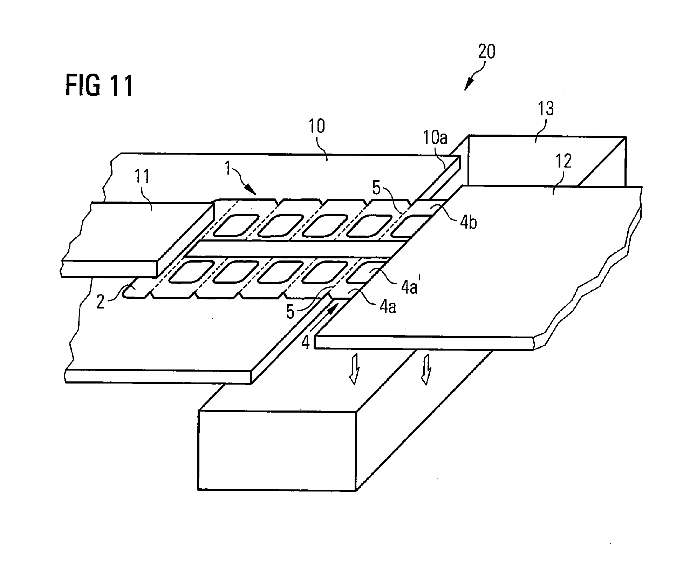

In Fig. 11 ist schematisch eine Vorrichtung 20 zum Abbrechen von Chipkartensubstratanteilen 4 von einem Chipkartensubstrat 2, wie sie aus dem Stand der Technik bekannt sind, dargestellt. Hierzu wird das Chipkartensubstrat 1 mittels einer Fixiereinrichtung 11, die den primären Steg 2 des Chipkartensubstrats 1 greift, derart an einem Werkzeug 10 mit einer Werkzeugkante 10a fixiert, dass die Werkzeugkante 10a im Wesentlichen entlang der primären Sollbruchlinie 5 des Chipkartensubstrats 1 verläuft. Dann wird mittels einer Biegeeinrichtung 12 eine Kraft auf den jeweils vordersten Chipkartensubstratanteil 4 ausgeübt, so dass der Chipkartensubstratanteil 4 über die Werkzeugkante 10a gebogen wird. In der Folge bricht der Chipkartensubstratanteil 4 durch das ausgeübte Biegemoment entlang der Sollbruchlinie 5 von dem Chipkartensubstrat 1 ab und fällt in den Sammelbehälter 13 zur Weiterverarbeitung.

In dem dargestellten Beispiel werden von dem Chipkartensubstrat 1 zwei Chipkarten 4a, 4b, die nicht miteinander durch einen sekundären Steg 3 verbunden sind, als Chipkartensubstratanteile 4 abgebrochen. Diese fallen dann zur Weiterverarbeitung in einen Behälter 13. Die dargestellte Vorrichtung zum Abbrechen von Chipkartensubstratanteilen 4 lässt sich natürlich im Zusammenhang mit allen vorbeschriebenen Chipkartensubstraten 1 verwenden. Falls die abgetrennten Chipkartensubstratanteile 4 mehrere Chipkarten umfassen, können von den in dem Sammelbehälter 13 gesammelten Chipkartensubstratanteilen 4 in einem weiteren Verfahrensschritt diese Chipkarten abgetrennt werden.

Bei dem in Fig. 11 dargestellten Beispiel verläuft die Werkzeugkante 10a exakt entlang der primären Sollbruchlinie 5. In diesem Fall ist die Belastung (das Biegemoment) des Chipkartensubstrats 1 bei der primären Sollbruchlinie 5 am höchsten, wenn die Chipkarten 4a, 4b mittels der Biegeeinrichtung über die Werkzeugkante 10a abgebrochen werden. Da die Sollbruchlinie 5 jedoch aus geschwächtem Material besteht, genügt es auch, wenn die Werkzeugkante 10a derart nahe an der primären Sollbruchline 5 verläuft, dass das auf das Chipkartensubstrat 1 ausgeübte Biegemoment entlang der Sollbruchlinie 5 verglichen mit anderen Stellen des Chipkartensubstrats 1 so hoch ist, dass das Chipkartensubstrat 1 entlang der Sollbruchlinie 5 und nicht an anderen Stellen des Chipkartensubstrats 1 bricht.

## Patentansprüche

1. Chipkartensubstrat (1), mit zumindest einer primären Sollbruchlinie (5), die sich von einer ersten Seite des Chipkartensubstrats (1) zu einer zweiten Seite des Chipkartensubstrats (1), ggf. durch Aussparungen unterbrochen, erstreckt, und entlang derer zumindest ein Chipkartensubstratanteil (4) von dem Chipkartensubstrat (1) abbrechbar ist, welcher Chipkartensubstratanteil (4) zumindest eine Chipkarte (4a, 4b, 4c, 4d) oder zumindest einen Chipkartenrohling (4a, 4b, 4c, 4d) umfasst, wobei die erste Seite der zweiten Seite gegenüberliegt, **dadurch gekennzeichnet, dass** das Chipkartensubstrat (1) zumindest einen sekundären Steg (3) zur Handhabung eines von dem Chipkartensubstrat (1) abgetrennten Chipkartensubstratanteils (4) umfasst, wobei der sekundäre Steg (3) nicht Bestandteil der zumindest einen Chipkarte (4a, 4b, 4c, 4d) oder des zumindest einen Chipkartenrohlings (4a, 4b, 4c, 4d) ist und wobei sich die primäre Sollbruchlinie (5) durch den sekundären Steg (3) erstreckt.

2. Chipkartensubstrat (1) nach Anspruch 1, **dadurch gekennzeichnet, dass** das Chipkartensubstrat (1) im Wesentlichen rechteckig ist.

3. Chipkartensubstrat (1) nach einem der vorhergehenden Ansprüche, **dadurch gekennzeichnet, dass** das Chipkartensubstrat (1) zumindest einen primären Steg (2, 2') zur Handhabung des Chipkartensubstrats (1) umfasst, der nicht Bestandteil des zumindest einen Chipkartensubstratanteils (4) ist.

4. Chipkartensubstrat (1) nach einem der vorhergehenden Ansprüche, **dadurch gekennzeichnet, dass** das Chipkartensubstrat (1) zumindest eine sekundäre Sollbruchlinie (6) umfasst, entlang derer sich die zumindest eine Chipkarte (4a, 4b, 4c, 4d) oder der zumindest eine Chipkartenrohling (4a, 4b, 4c, 4d) von einem vom Chipkartensubstrat (1) abgetrennten Chipkartensubstratanteil (4) abbrechen lässt.

5. Chipkartensubstrat (1) nach einem der vorherigen Ansprüche, **dadurch gekennzeichnet, dass** sich die Sollbruchlinie oder -linien (5, 6) geradlinig erstreckt bzw. erstrecken.

6. Chipkartensubstrat (1) nach einem der vorhergehenden Ansprüche, **dadurch gekennzeichnet, dass** die Sollbruchlinie oder -linien (5, 6) eine Kerbe im Chipkartensubstrat (1) oder eine Perforation des Chipkartensubstrats (1) umfasst bzw. umfassen.

7. Chipkartensubstrat (1) nach einem der vorhergehenden Ansprüche, **dadurch gekennzeichnet, dass** das Chipkartensubstrat (1) im Spritzgussverfahren erzeugt ist.

8. Chipkartensubstrat (1) nach Anspruch 7, **dadurch gekennzeichnet, dass** auch die Sollbruchlinie oder -linien (5, 6) durch ein Spritzgussverfahren erzeugt ist bzw. sind.

9. Verfahren zum Herauslösen von Chipkartensubstratanteilen (4) aus einem Chipkartensubstrat (1) nach Anspruch 4 mit den folgenden Schritten:
- zur Verfügung Stellen des Chipkartensubstrats (1),
- Abbrechen des zumindest einen Chipkartensubstratanteils (4) von dem Chipkartensubstrat (1) durch Erzeugen eines Biegemoments entlang der primären Sollbruchlinie (5),
- Abbrechen der zumindest einen Chipkarte (4a,4b,4c,4d) oder des zumindest einen Chipkartenrohlings (4a,4b,4c,4d) von dem zumindest einen abgebrochenen Chipkartensubstratanteil (4) durch Erzeugen eines Biegemoments entlang der sekundären Sollbruchlinie (6),
- wobei während des Abbrechens der zumindest einen Chipkarte (4a,4b,4c,4d) oder des zumindest einen Chipkartenrohlings (4a,4b,4c,4d) der Chipkartensubstratanteil (4) an dem jeweiligen sekundären Steg (3) gehalten wird.

10. Verfahren nach Anspruch 9, **dadurch gekennzeichnet, dass** das Chipkartensubstrat (1) während des Abbrechens an dem primären Steg (2) gehalten wird.

11. Verfahren nach Anspruch 9 oder 10, **dadurch gekennzeichnet, dass** zum Erzeugen des Biegemoments entlang der primären Sollbruchlinie (5) eine im Wesentlichen entlang der primären Sollbruchlinie (5) verlaufende Werkzeugkante (10) verwendet wird.

## Claims

1. A chip card substrate (1) with at least one primary rated breaking line (5) extending from a first side of the chip card substrate (1) to a second side of the chip card substrate (1), possibly interrupted by gaps, and along which at least one chip-card substrate portion (4) can be broken off from the chip card substrate (1), said chip-card substrate portion (4) comprising at least one chip card (4a, 4b, 4c, 4d) or at least one chip card blank (4a, 4b, 4c, 4d), wherein the first side lies opposite the second side, **characterized in that** the chip card substrate (1) has at least one secondary bar (3) for handling a chip-card substrate portion (4) detached from the chip card substrate (1), wherein the secondary bar (3) does not form part of the at least one chip card (4a, 4b, 4c, 4d) or of the at least one chip card blank (4a, 4b, 4c, 4d) and wherein the primary rated breaking line (5) extends through the secondary bar (3).

2. The chip card substrate (1) according to claim 1, **characterized in that** the chip card substrate (1) is substantially rectangular.

3. The chip card substrate (1) according to any of the preceding claims, **characterized in that** the chip card substrate (1) comprises at least one primary bar (2, 2') for handling the chip card substrate (1), said bar not forming part of the at least one chip-card substrate portion (4).

4. The chip card substrate (1) according to any of the preceding claims, **characterized in that** the chip card substrate (1) comprises at least one secondary rated breaking line (6), along which the at least one chip card (4a, 4b, 4c, 4d) or the at least one chip card blank (4a, 4b, 4c, 4d) can be broken off from a chip-card substrate portion (4) detached from the chip card substrate (1).

5. The chip card substrate (1) according to any of the preceding claims, **characterized in that** the rated breaking line or lines (5, 6) extends or extend in a straight line.

6. The chip card substrate (1) according to any of the preceding claims, **characterized in that** the rated breaking line or lines (5, 6) comprises or comprise a notch in the chip card substrate (1) or a perforation of the chip card substrate (1).

7. The chip card substrate (1) according to any of the preceding claims, **characterized in that** the chip card substrate (1) is produced in the injection molding method.

8. The chip card substrate (1) according to claim 7, **characterized in that** also the rated breaking line or lines (5, 6) is or are produced by an injection molding method.

9. A method for separating chip-card substrate portions (4) from a chip card substrate (1) according to claim 4 with the following steps of:
- making available the chip card substrate,
- breaking off the at least one chip-card substrate portion (4) from the chip card substrate (1) by producing a bending moment along the primary rated breaking line (5),
- breaking off the at least one chip card (4a, 4b, 4c, 4d) or the at least one chip card blank (4a, 4b, 4c, 4d) from the at least one broken off chip-card substrate portion (4) by producing a bending moment along the secondary rated breaking line (6),
- wherein during the breaking off of the at least one chip card (4a, 4b, 4c, 4d) or of the at least one chip card blank (4a, 4b, 4c, 4d) the chip-card substrate portion (4) is held on the respective secondary bar (3).

10. The method according to claim 9, **characterized in that** the chip card substrate is held on the primary bar (2) during the breaking off.

11. The method according to claim 9 or 10, **characterized in that** for producing the bending moment along the primary rated breaking line (5) a tool edge (10) is utilized which extends substantially along the primary rated breaking line (5).

## Revendications

1. Substrat de carte à puce (1) ayant au moins une ligne primaire destinée à la rupture (5) s'étendant d'un premier côté du substrat de carte à puce (1) à un deuxième côté du substrat de carte à puce (1), interrompue le cas échéant par des évidements, et le long de laquelle au moins un morceau (4) de substrat de carte à puce est détachable par rupture du substrat de carte à puce (1), ledit morceau (4) de substrat de carte à puce comprenant au moins une carte à puce (4a, 4b, 4c, 4d) ou au moins une vierge de carte à puce (4a, 4b, 4c, 4d), le premier côté faisant face au deuxième côté, **caractérisé en ce que** le substrat de carte à puce (1) comprend au moins une bride secondaire (3) destinée à la manipulation d'un morceau (4) de substrat de carte à puce séparé par rupture du substrat de carte à puce (1), la bride secondaire (3) ne faisant pas partie de la au moins une carte à puce (4a, 4b, 4c, 4d) ou de la au moins une vierge de carte à puce (4a, 4b, 4c, 4d) et la ligne primaire destinée à la rupture (5) s'étendant à travers la bride secondaire (3).

2. Substrat de carte à puce (1) selon la revendication 1, **caractérisé en ce que** le substrat de carte à puce (1) est essentiellement rectangulaire.

3. Substrat de carte à puce (1) selon une des revendications précédentes, **caractérisé en ce que** le substrat de carte à puce (1) comprend au moins une bride primaire (2, 2') qui est destinée à la manipulation du substrat de carte à puce (1) et qui ne fait pas partie du au moins un morceau de substrat de carte à puce (4).

4. Substrat de carte à puce (1) selon une des revendications précédentes, **caractérisé en ce que** le substrat de carte à puce (1) comprend au moins une ligne secondaire destinée à la rupture (6) le long de laquelle la au moins une carte à puce (4a, 4b, 4c, 4d) ou la au moins une vierge de carte à puce (4a, 4b, 4c, 4d) peut être détachée par rupture d'un morceau de substrat de carte à puce (4) séparé par rupture du substrat de carte à puce (1).

5. Substrat de carte à puce (1) selon une des revendications précédentes, **caractérisé en ce que** la ou les ligne(s) destinée(s) à la rupture (5, 6) s'étend ou s'étendent de manière rectiligne.

6. Substrat de carte à puce (1) selon une des revendications précédentes, **caractérisé en ce que** la ou les ligne(s) destinée(s) à la rupture (5, 6) comprend ou comprennent une encoche dans le substrat de carte à puce (1) ou une perforation du substrat de carte à puce (1).

7. Substrat de carte à puce (1) selon une des revendications précédentes, **caractérisé en ce que** le substrat de carte à puce (1) est généré par procédé de moulage par injection.

8. Substrat de carte à puce (1) selon la revendication 7, **caractérisé en ce que** la ou les ligne(s) destinée(s) à la rupture (5, 6) est ou sont également générée(s) par un procédé de moulage par injection.

9. Procédé destiné à la séparation de morceaux (4) de substrat de carte à puce à partir d'un substrat de carte à puce (1) selon la revendication 4, comportant les étapes suivantes:
- mise à disposition du substrat de carte à puce (1),
- détachement par rupture du au moins un morceau (4) de substrat de carte à puce du substrat de carte à puce (1) par génération d'un moment de flexion le long de la ligne primaire destinée à la rupture (5),
- détachement par rupture de la au moins une carte à puce (4a, 4b, 4c, 4d) ou de la au moins une vierge de carte à puce (4a, 4b, 4c, 4d) du au moins un morceau de substrat de carte à puce (4) détaché par rupture, par génération d'un moment de flexion le long de la ligne secondaire destinée à la rupture (6),
- cependant que, durant le détachement par rupture de la au moins une carte à puce (4a, 4b, 4c, 4d) ou de la au moins une vierge de carte à puce (4a, 4b, 4c, 4d), le morceau de substrat de carte à puce (4) est maintenu à la bride secondaire (3) respective.

10. Procédé selon la revendication 9, **caractérisé en ce que** le substrat de carte à puce (1) est maintenu à la bride primaire (2) durant le détachement par rupture.

11. Procédé selon la revendication 9 ou 10, **caractérisé en ce que**, pour la génération du moment de flexion le long de la ligne primaire destinée à la rupture (5), une arête d'outil (10) évoluant essentiellement le long de la ligne primaire destinée à la rupture (5) est utilisée.
